(19) Europäisches Patentamt
European Patent Office
Office européen des brevets

(11) EP 4 641 693 A1

(12) EUROPEAN PATENT APPLICATION
published in accordance with Art. 153(4) EPC

(43) Date of publication:
**29.10.2025 Bulletin 2025/44**

(21) Application number: **23907025.3**

(22) Date of filing: **19.12.2023**

(51) International Patent Classification (IPC):
*H01M 4/60* (2006.01) *H01M 4/13* (2010.01)
*H01M 4/36* (2006.01) *H01M 4/134* (2010.01)
*H01M 4/136* (2010.01) *H01M 4/137* (2010.01)

(52) Cooperative Patent Classification (CPC):
**H01M 4/13; H01M 4/134; H01M 4/136; H01M 4/137; H01M 4/36; H01M 4/60**

(86) International application number:
**PCT/JP2023/045442**

(87) International publication number:
**WO 2024/135665 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 JP 2022206021**

(71) Applicants:
- **Wingo Technology Co., Ltd.**
  **Okayama-shi, Okayama 701-1221 (JP)**
- **DKS Co. Ltd.**
  **Kyoto-shi, Kyoto 600-8873 (JP)**

(72) Inventors:
- **GOSHIMA, Toshiyuki**
  **Okayama-shi, Okayama 701-1221 (JP)**
- **WIN Maw, Soe**
  **Okayama-shi, Okayama 701-1221 (JP)**
- **HIBINO, Atsuhiko**
  **Kyoto-shi, Kyoto 600-8873 (JP)**
- **NISHIKAWA, Akiyoshi**
  **Kyoto-shi, Kyoto 600-8873 (JP)**

(74) Representative: **ABG Intellectual Property Law, S.L.**
**Avenida de Burgos, 16D**
**Edificio Euromor**
**28036 Madrid (ES)**

# (54) POLYIMIDE COMPOUND, NEGATIVE ELECTRODE MATERIAL FOR LITHIUM ION SECONDARY BATTERIES THAT USES SAID POLYIMIDE COMPOUND, NEGATIVE ELECTRODE FOR LITHIUM ION SECONDARY BATTERIES, AND LITHIUM ION SECONDARY BATTERY

(57) A polyimide that can be cured at relatively low temperatures as Electrode material is provided. The polyimide used as an electrode material for lithium-ion secondary batteries, in which a diamine component contains aromatic diamine compounds represented by the following Formulae (1) and (2).

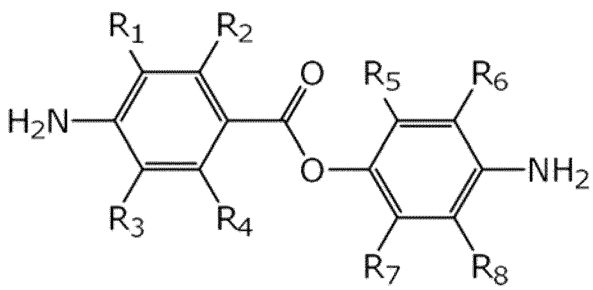

(1)

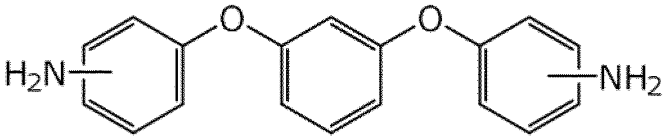

(2)

## Description

### Field of the Invention

The present invention relates to a polyimide compound, especially, a polyimide compound preferably used as an electrode material for lithium-ion secondary batteries, a negative electrode for lithium-ion secondary batteries and a lithium-ion secondary battery.

### Background Art

In recent years, the miniaturization of electronic devices such as smartphones has been rapidly progressing, and the development of lithium-ion secondary batteries that are small, lightweight, and capable of obtaining high energy density is being actively carried out.

Silicon (Si)-based materials, which have high discharged capacity, excellent initial charge/discharge efficiency, and cycle characteristics, are used as negative electrode active materials contained in lithium-ion secondary batteries. Meanwhile, silicon expands and shrinks significantly during charging and discharging, and its repeated use may cause disconnection of conductive paths between negative electrode active materials, the separation between the current collector and the negative electrode active material layer, and the like.

In view of the problems of the above-described silicon-based materials, the use of polyimide compounds as a material for negative electrodes and as a binder resin has been investigated in place of conventionally used carboxymethyl cellulose and the like (see Patent Document 1). In particular, even when silicon-based negative electrode active materials are used in lithium-ion secondary batteries, polyimide compounds containing specific aromatic diamine compounds as diamine components have been proposed as polyimide compounds that can suppress electrode expansion and improve cycle characteristics (Patent Document 2).

### Prior Art References

### Patent Document

[Patent Document 1] WO2017/138604 A1
[Patent Document 2] WO2022/202701 A1

## SUMMARY OF INVENTION

### Technical Problem

Using the aforementioned polyimide compounds as negative electrode materials for lithium-ion secondary batteries, a solution containing silicon-based negative electrode active material and polyimide compounds is coated onto the surface of a current collector such as aluminum foil, and then subjected to high-temperature heat treatment to form the negative electrode active material layer. In recent years, with the miniaturization of lithium-ion batteries, the current collectors have been made thinner. Collectors with thicknesses of 10 μm or less are now being used, and depending on the temperature of the heat treatment during the formation of the negative electrode active material layer, the collector may degrade. Therefore, attempts are being made to perform heat treatment at lower temperatures. However, lowering the heat treatment temperature during the formation of the negative electrode active material layer results in a significant deterioration of the cycle characteristics of the resulting lithium-ion secondary battery, presenting a new issue.

The present invention has been made in view of the above-described problems. The solution to the problems is to provide a polyimide compound that enables the realization of a lithium-ion secondary battery with excellent cycle characteristics even when the heat treatment temperature for forming the negative electrode active material layer is set to a relatively low temperature of approximately 200°C, without compromising the inherent properties of polyimide compounds such as heat resistance and mechanical properties.

In addition, an object of the present invention is to provide a negative electrode material containing the polyimide compound for a lithium-ion secondary battery, a negative electrode composed of the negative electrode material, and a lithium-ion secondary battery comprising the negative electrode.

Solution to Problem

The present inventors have found that by using two specific aromatic diamines as the diamine component, even when the heat treatment temperature for forming the negative electrode active material layer is reduced to a relatively low temperature such around 200°C, while maintaining the inherent properties of polyimide, such as heat resistance and mechanical properties, lithium-ion secondary batteries with excellent cycle characteristics can be obtained. The present invention is based on these findings. In other words, the gist of the present invention is as follows.

[1] A polyimide used as an electrode material for lithium-ion secondary batteries, comprising at least

a diamine component containing an aromatic diamine compound represented by the following Formula (1):

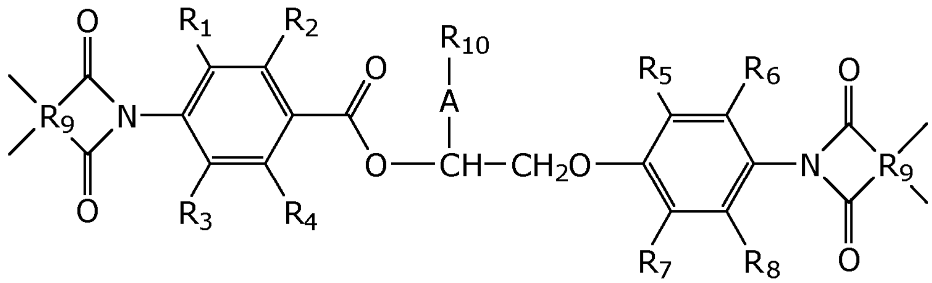

(1)

(where
$R_1$ to $R_4$ are hydrogen atoms, and
any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom), and
an aromatic diamine compound represented by the following Formula (2).

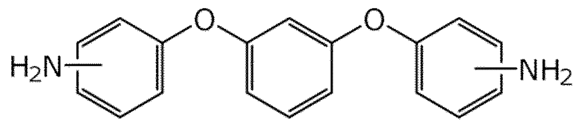

(2)

[2] The polyimide according to claim 1, wherein an acid anhydride component contains an acid anhydride represented by the following Formula (3):

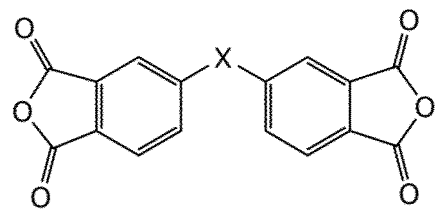

(3)

(where X is carbonyl group, oxygen atom or a single bond).

[3] T The polyimide according to claim 1, wherein the compound of Formula (1) is contained at 10 mol% or more in the diamine component.

[4] A negative electrode for lithium-ion secondary battery, comprising a negative electrode current collector and a negative active material layer formed on the negative electrode negative electrode current collector, wherein the negative electrode active material layer is composed of the negative electrode material according to [1].

[5] The negative electrode for lithium-ion secondary battery according to [4], wherein the negative electrode active material layer comprises 95 mass parts or more of a silicon-based negative electrode active material based on 100 mass parts of the negative electrode active material.

[6] A lithium-ion secondary battery, comprising the negative electrode according to [4] or [5], a positive electrode and a non-aqueous electrolyte.

Advantageous Effects of Invention

According to the polyimide compound of the present invention, by using two specific aromatic diamine compounds as the diamine component, it is possible to achieve a lithium-ion secondary battery with excellent cycle characteristics even when the heat treatment temperature for forming the negative electrode active material layer is set to a relatively low temperature of around 200°C, without compromising the inherent properties of polyimide compounds such as heat resistance and mechanical properties.

DETAILED DESCRIPTION OF THE INVENTION

[Definition]

In the present invention, "solvent-soluble" means that 5 g or more is dissolved in 100 g of an organic solvent.
In addition, "aromatic groups" include substituents that bind to the main skeleton via an oxygen atom, a nitrogen atom, or a carbon atom. Further, aromatic groups include heteroaromatic groups such as a pyrrole group.

[Polyimide compound]

The polyimide compound of the present invention is composed of a diamine component containing an aromatic diamine compound represented by the following Formulae (1) and (2) and any acid anhydride component:

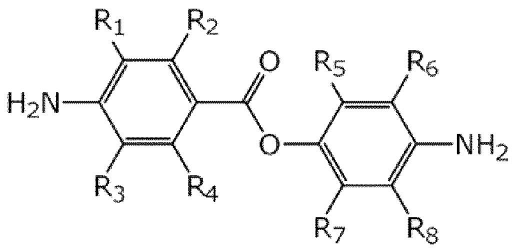
(1)

(where

$R_1$ to $R_4$ are hydrogen atoms, and
any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom).

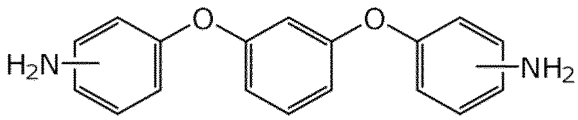
(2)

According to the polyimide compound of the present invention, by using two specific aromatic diamine compounds as the diamine component, it is possible to achieve a lithium-ion secondary battery with excellent cycle characteristics even when the heat treatment temperature for forming the negative electrode active material layer is set to a relatively low temperature of around 200°C, without compromising the inherent properties of polyimide compounds such as heat resistance and mechanical properties. The exact reason for this is unclear, but it can be speculated as follows.
The inventors of the present invention have discovered that, in the previous application, by using the aromatic diamine compounds represented by the above formula (1) as the diamine component of a polyimide compound, and employing the polyimide compound as a negative electrode material containing Si, the cycle characteristics of a lithium secondary battery are significantly improved. However, under certain conditions (i.e., temperature) when forming the negative electrode active material layer on the current collector, the cycle characteristics did not improve. The inventors investigated the reasons for this. The inventors found that in polyimide compounds containing the aromatic diamine compounds represented by the above formula (1) as the diamine component, the cycle characteristics deteriorate when the glass transition temperature (Tg) of the polyimide compound is higher than the heat treatment temperature. Furthermore, upon further investigation, the inventors have found that by using both the aromatic diamine compounds represented by the formulae (1) and (2) as the diamine component of the polyimide compound, the issue of the inherent properties of the polyimide compound (e.g., heat resistance) being compromised due to low Tg was resolved. As a result, it is considered that the cycle characteristics of lithium-ion secondary batteries can be improved even when the negative

electrode active material layer is formed under relatively low-temperature conditions (e.g., around 200°C).

<Diamine component>

In the aromatic diamine compound of formula (1) used as the diamine component of the polyimide compound of the present invention, the aromatic group having from 6 to 10 carbon atoms is preferably unsubstituted from the viewpoint of the ease of synthesis and the application in the field of electronic component materials but may have a substituent. Examples of a substituent include an alkyl group, a halogen group such as a fluoro group or chloro group, an amino group, a nitro group, a hydroxyl group, a cyano group, a carboxyl group, and a sulfonic acid group. The alkyl group or aromatic group may have one, two, or more of these substituents.

Examples of the aromatic group having from 6 to 10 carbon atoms include heteroaromatic groups such as a phenyl group, a tolyl group, a methylphenyl group, a dimethylphenyl group, an ethylphenyl group, a diethylphenyl group, a propylphenyl group, a butylphenyl group, a fluorophenyl group, a pentafluorophenyl group, a chlorphenyl group, a bromophenyl group, a methoxyphenyl group, a dimethoxyphenyl group, an ethoxyphenyl group, a diethoxyphenyl group, an aminophenyl group, a nitrophenyl group, a nitrobenzyl group, a cyanophenyl group, a cyanobenzyl group, a phenethyl group, a phenylpropyl group, a phenylamino group, a diphenylamino group, a biphenyl group, a naphthyl group, a phenylnaphthyl group, a diphenylnaphthyl group, an anthryl group, an anthrylphenyl group, a phenylanthryl group, a naphthacenyl group, a phenanthryl group, a phenanthrylphenyl group, a phenylphenanthryl group, a pyrenyl group, a phenylpyrenyl group, a fluorenyl group, a phenylfluorenyl group, a naphthylethyl group, a naphthylpropyl group, an anthracenylethyl group, a phenanthrylethyl group, a pyrrole group, an imidazole group, a thiazole group, an oxazole group, a furan group, a thiophene group, a triazole group, a pyrazole group, an isooxazole group, an isothiazole group, a pyridine group, a pyrimidine group, a benzofuran group, a benzothiophene group, a quinoline group, an isoquinoline group, an indolyl group, a benzothiazolyl group, and a carbazolyl group.

Among the above-described aromatic groups, a phenyl group and a methylphenyl group are preferable from the viewpoint of the availability of starting materials and synthesis costs.

In addition, two or more of the aromatic diamine compounds represented by Formula (1) above may be used in combination.

The diamine compounds satisfying the above formula (1) are specifically compounds represented by the following formula (4), and 2-phenyl-4-aminophenyl)-4-aminobenzoate is preferably used.

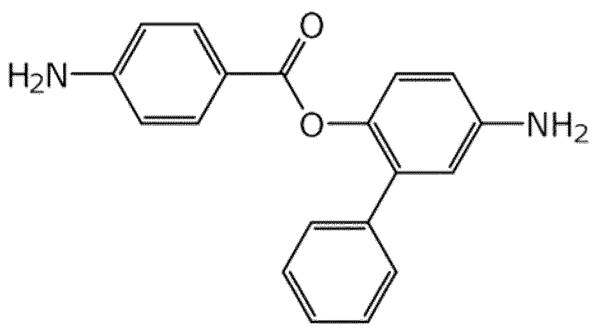

(4)

The aromatic diamine compound represented by formula (1) can be obtained by reacting a compound represented by the following formula (6) with a compound represented by the following formula (5) and then reducing the nitro group.

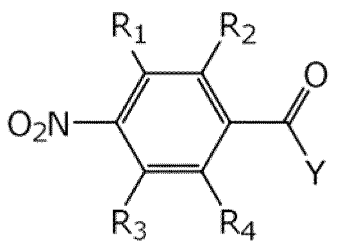

(5)

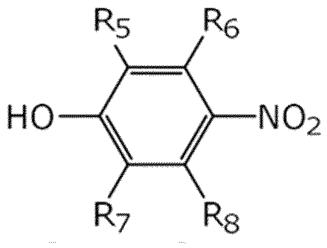

(6)

In the above formula, $R_1$ to $R_4$ and $R_5$ to $R_8$ are the same as defined in formula (1) above. Y represents a halogen group selected from a hydroxyl group, a fluoro group, a chloro group, a bromo group, and an iodo group. From the viewpoint of reactivity with compounds represented by general formula (6), Y is preferably a halogen group, and is particularly preferably a chloro group or a bromo group.

In the above formula (5), when Y is a hydroxyl group, the reaction of the compounds represented by formulae (5) and (6) is preferably carried out in the presence of a dehydration condensation agent such as N,N'-dicyclohexylcarbodiimide (DCC) or an organic acid catalyst such as p-toluenesulfonic acid. Additionally, in the above formula (5), when Y is a halogen group, the reaction of the compounds represented by the above formulas (5) and (6) is preferably carried out in the presence of an acid acceptor such as triethylamine.

Specifically, the diamine compound represented by the above formula (4) can be obtained by reacting the compounds represented by the following formula (7) with the compounds represented by the following formula (8).

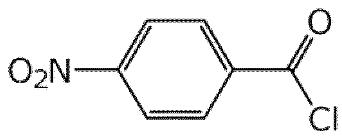

(7)

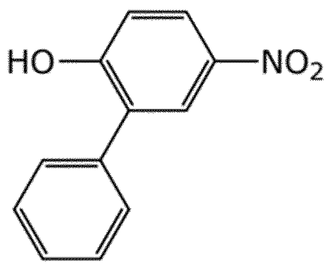

(8)

The compound represented by the above formula (6) can be obtained by nitrating the compound represented by the following equation (9), which is commercially available or synthesized. The nitration of the compounds represented by the following formula (9) can be performed using conventionally known nitration methods employing a mixture of concentrated sulfuric acid and concentrated nitric acid, nitric acid, fuming nitric acid, alkaline metal salts in concentrated sulfuric acid, nitric acid acetyl, nitronium salts, nitrogen oxides, etc. Note that $R_5$ to $R_8$ in the formula have the same meanings as defined in formula (1) above.

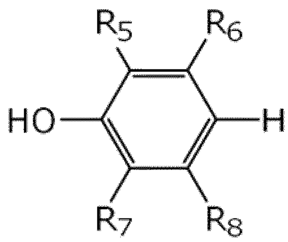

(9)

In the present invention, from the perspectives of heat resistance, mechanical strength, and cycle characteristics, it is preferable that the aromatic diamine compound represented by the above formula (1) constitutes 10 mol% or more of the diamine component constituting the polyimide compound, and more preferably 30 to 50 mol%.

The aromatic diamine compounds represented by formula (1) and the aromatic diamine compounds represented by formula (2) used in combination with the aromatic diamine compounds represented by formula (1) include three types in which the amino group is located at the ortho position, meta position, or para position. Among these three types, aromatic

diamine compounds in which the amino group is located at the meta position and para position can be preferably used. Specifically, the compounds represented by formula (10), 1,3-bis(3-aminophenoxy)benzene (APB-N), or the compounds represented by formula (11), 1,3-bis(4-aminophenoxy)benzene (TPE-R), are preferably used.

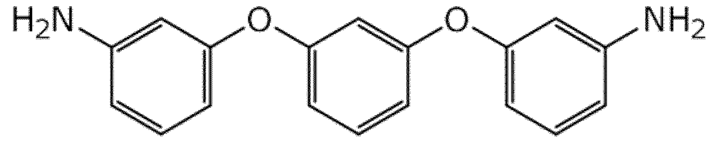

(10)

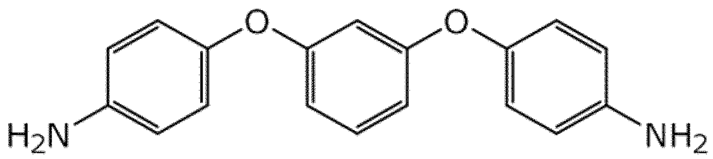

(11)

In the present invention, from the perspective of heat resistance, mechanical strength, and retention rate of cycle characteristics when the heating temperature is lowered, it is preferable that the aromatic diamine compound represented by the above formula (2) constitutes 30 mol% or more of the diamine component constituting the polyimide compound, and more preferably 30 to 50 mol%.

In the present invention, the ratio of the aromatic diamine compound of formula (1) to the aromatic diamine compound of formula (2) is preferably in the range of 2:1 to 1:5, more preferably in the range of 3:2 to 2:3, and particularly preferably 1:1.

In the present invention, the diamine compound may include diamine compounds other than the aromatic diamine compounds represented by the above-mentioned formulae (1) and (2) as the diamine component. Examples thereof include m-phenylenediamine, p-phenylenediamine, p-phenylenediamine sulfate, 2,4-diaminotoluene, 2,4(6)-diamino-3,5-diethyltoluene, 5(6)-amino-1,3,3-trimethyl-1-(4-aminophenyl)-indane, 4,4'-diamino-2,2'-dimethyl-1,1'-biphenyl, 4,4'-diamino-2,2'-ditrifluoromethyl-1,1'-biphenyl, 4,4'-diamino-3,3'-dimethyl-1,1'-biphenyl, 3,4'-diaminodiphenyl ether, 4,4'-diaminodiphenyl ether, 3,3'-diaminodiphenylsulfone, 4,4'-diaminodiphenylsulfone, 4,4'-diaminodiphenylsulfide, 4-aminophenyl-4-aminobenzoate, 4,4'-(9-fluorenylidene)dianiline, 9,9'-bis(3-methyl-4-aminophenyl)fluorene, 1,3-bis(4-aminophenoxy)benzene, 1,4-bis(4-aminophenoxy)benzene, 2,2-bis(4-aminophenyl)propane, 2,2-bis(3-methyl-4-aminophenyl)propane, 4,4'-(hexafluoroisopropylidene)dianiline, 2,2-bis(3-amino-4-methylphenyl)hexafluoropropane, 2,2-bis(3-methyl-4-aminophenyl)benzene, 2,2-bis[4-(4-aminophenoxy)phenyl]propane, 2,2-bis[4-(4-aminophenoxy)phenyl]hexafluoropropane, α,α-bis[4-(4-aminophenoxy)phenyl]-1,3-diisopropylbenzene, α,α-bis[4-(4-aminophenoxy)phenyl]-1,4-diisopropylbenzene, 3,7-diamino-dimethyldibenzothiophene, bis[4-(4-aminophenoxy)phenyl]sulfone, 5,5-dioxide, bis(3-carboxy-4-aminophenyl)methylene, 3,3'-diamino-4,4'-dihydroxy-1,1'-biphenyl, 4,4'-diamino-3,3'-dihydroxy-1,1'-biphenyl, 2,2-bis(3-amino-4-hydroxyphenyl)propane, 2,2-bis(3-amino-4-hydroxyphenyl)hexafluoropropane, 1,3-bis(3-hydroxy-4-aminophenoxy)benzene, 2,2-bis(3-hydroxy-4-aminophenyl)benzene, and 3,3'-diamino-4,4'-dihydroxydiphenylsulfone, 4,4'-bis(4-aminophenoxy)biphenyl, silicone-containing diamines such as PAM-E, 4-amino-4-aminophenyl benzoic acid, o-tridinesulfon, 4,4'-[1,3-phenylene bis(1-methylethylidene)] sulfonyl-containing bis(o-aminophenol), 4,4'-diamin-3,3'-dimethylphenol,1,4-bis(4-amino-α,α-dimethylbenzyl)benzene, 3,5-diaminoanisic acid, 5,5'-methylenebis(2-aminoanisic acid), 4,4'-methylenebis(2-methylcyclohexylamine).

In addition to the aromatic diamines represented by the above formulae (1) and (2), the following diamine components were selected based on their heat resistance, mechanical strength, and cycle characteristics: bis[4-(4-aminophenoxy)phenyl]sulfone, 4,4'-diaminodiphenyl sulfide,2,2-bis[4-(4-aminophenoxy)phenyl]propane, 4,4'-diaminodiphenyl ether, 4,4'-bis(4-aminophenoxy)biphenyl, 3,4'-diaminodiphenyl ether, and 4-aminobenzoic acid 4-aminophenyl are preferred.

When the diamine compound other than the aromatic diamine compound represented by the above formula (1) and formula (2) is contained, the content of said diamine compound is preferably 40 mol% or less, and more preferably in the range of 15 to 35 mol%, based on the total amount of diamine compounds.

<Acid anhydride component>

The acid anhydride constituting the polyimide of the present invention is not particularly limited, and various acid anhydrides used for polyimides can be used. Examples thereof include oxydiphthalic acid, pyromellitic dianhydride, 3-fluoropyromellitic dianhydride, 3,6-difluoropyromellitic dianhydride, 3,6-bis(trifluoromethyl)pyromellitic dianhydride, 1,2,3,4-benzene tetracarboxylic dianhydride, 1,2,4,5-benzenetetracarboxylic acid dianhydride, 2,2',3,3'-benzophenone tetracarboxylic dianhydride, 3,3',4,4'-biphenyl tetracarboxylic dianhydride, 3,3',4,4'-biphenylsulfone tetracarboxylic dianhydride, 4,4'-(4,4'-isopropylidene diphenoxy)bisphthalic dianhydride, 2,3,3',4'-biphenyl tetracarboxylic dianhydride, 3,3",4,4"-terphenyl tetracarboxylic dianhydride, 3,3"',4,4"'-quaterphenyl tetracarboxylic dianhydride, 2,2',3,3'-biphenyl tetracarboxylic dianhydride, methylene-4,4'-diphthalic dianhydride, 1,1-ethynylidene-4,4'-diphthalic dianhydride, 2,2-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 1,3-bis [2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl]methane dianhydride, bis[4-(3,4-dicarboxyphenoxy)phenyl]methane dianhydride, 2,2-bis[3-(3,4-dicarboxyphenoxy)phenyl]propane dianhydride, 2,2-bis[4-(3,4-dicarboxyphenoxy)phenyl]propane dianhydride, difluoromethylene-4,4'-diphthalic dianhydride, 1,1,2,2-tetrafluoro-1,2-ethylene-4,4'-diphthalic dianhydride, 3,3',4,4'-diphenylsulfone tetracarboxylic dianhydride, bis(3,4-dicarboxyphenyl)ether dianhydride, thio-4,4'-diphthalic dianhydride, sulfonyl-4,4'-diphthalic dianhydride, 1,3-bis(3,4-dicarboxyphenyl)benzene dianhydride, 1,4-bis(3,4-dicarboxyphenyl)benzene dianhydride, 1,3-bis(3,4-dicarboxyphenoxy)benzene dianhydride, 1,4-bis(3,4-dicarboxyphenoxy) benzene dianhydride, bis(3,4-dicarboxyphenoxy)dimethylsilane dianhydride, 1,3-bis(3,4-dicarboxyphenoxy)-1,1,3,3-tetramethyldisiloxane dianhydride, 2,3,6,7-naphthalene tetracarboxylic dianhydride, 1,2,5,6-naphthalene tetracarboxylic dianhydride, 3,4,9,10-perylene tetracarboxylic dianhydride, 2,3,6,7-anthracene tetracarboxylic dianhydride, 1,2,7,8-phenanthrene tetracarboxylic dianhydride, 1,2,3,4-butane tetracarboxylic dianhydride, 1,2,3,4-cyclobutane tetracarboxylic dianhydride, cyclopentane tetracarboxylic dianhydride, cyclohexane-1,2,3,4- tetracarboxylic dianhydride, cyclohexane-1,2,4,5-tetracarboxylic dianhydride, carbonyl-4,4'-bis(cyclohexane-1,2-dicarboxylic acid)dianhydride, methylene-4,4'-bis(cyclohexane-1,2-dicarboxylic acid)dianhydride, 1,2-ethylene-4,4'-bis(cyclohexane-1,2-dicarboxylic acid) dianhydride, oxy-4,4'-bis(cyclohexane-1,2-dicarboxylic acid)dianhydride, thio-4,4'-bis(cyclohexane-1,2-dicarboxylic acid)dianhydride, sulfonyl-4,4'-bis(cyclohexane-1,2-dicarboxylic acid)dianhydride, 3,3',5,5'-tetrakis(trifluoromethyl) oxy-4,4'-diphthalic dianhydride, 3,3',6,6'-tetrakis(trifluoromethyl)oxy-4,4'-diphthalic dianhydride, 5,5',6,6'-tetrakis(trifluoromethyl)oxy-4,4'-diphthalic dianhydride, 3,3',5,5',6,6'-hexakis(trifluoromethyl)oxy-4,4'-diphthalic dianhydride, 3,3'-difluorosulfonyl-4,4'-diphthalic dianhydride, 5,5'-difluorosulfonyl-4,4'-diphthalic dianhydride, 6,6'-difluorosulfonyl-4,4'-diphthalic dianhydride, 3,3',5,5',6,6'-hexafluorosulfonyl-4,4'-diphthalic dianhydride, 3,3'-bis(trifluoromethyl)sulfonyl-4,4'-diphthalic dianhydride, 5,5'-bis(trifluoromethyl)sulfonyl-4,4'-diphthalic dianhydride, 6,6'-bis(trifluoromethyl)sulfonyl-4,4'-diphthalic dianhydride, 3,3',5,5'-tetrakis(trifluoromethyl)sulfonyl-4,4'-diphthalic dianhydride, 3,3',6,6'-tetrakis(trifluoromethyl)sulfonyl-4,4'-diphthalic dianhydride, 5,5',6,6'-tetrakis(trifluoromethyl)sulfonyl-4,4'-diphthalic dianhydride, 3,3',5,5',6,6'-hexakis(trifluoromethyl)sulfonyl-4,4'-diphthalic dianhydride, 3,3'-difluoro-2,2-perfluoropropylidene-4,4'-diphthalic dianhydride, 5,5'-difluoro-2,2-perfluoropropylidene-4,4'-diphthalic dianhydride, 6,6'-difluoro-2,2-perfluoropropylidene-4,4'-diphthalic dianhydride, 3,3',5,5',6,6'-hexafluoro-2,2-perfluoropropylidene-4,4'-diphthalic dianhydride, 3,3'-bis(trifluoromethyl)-2,2-perfluoropropylidene-4,4'-diphthalic dianhydride, ethylene glycol bistrimellitate dianhydride, methyltetrahydrophthalic anhydride, methylhexahydrophthalic anhydride, methylhimic anhydride, hexahydrophthalic anhydride, tetrahydrophthalic anhydride, trialkyltetrahydrophthalic anhydride, methylcyclohexenedicarboxylic anhydride, bicyclo[2.2.2]oct-7-ene-2,3,5,6-tetracarboxylic dianhydride, bicyclo[2.2.2]octane-2,3,5,6- tetracarboxylic dianhydride, 3-(carboxymethyl)1,2,4-cyclopentanecarboxylic acid 1,4:2,3-dianhydride, 5-(2,5-dioxotetrahydrofuryl)-3-methyl-3-cyclohexene-1,2-dicarboxylic anhydride, 4-(2,5-dioxotetrahydrofuran-3-yl)-1,2,3,4-tetrahydronaphthalene-1,2-dicarboxylic anhydride, 5,5'-(1,4-phenylene)bis(hexahydro-4,7-methanoisobenzofuran-1,3-dione, and octahydro-3H,3"H-dispiro[4,7-methanoisobenzofuran-5,1'-cyclopentane-3',5"-[4,7]methanoisobenzofuran]-1,1",2',3,3"(4H,4"H)-pentaone, 1,2,4,5-Cyclohexanetetracarboxylic acid dianhydride, TDA-100, BzDA, 2,3,5-Tricarboxycyclopentyl acetate, 4,4'-[1,4-Phenylene bis(imino carbonyl)] bis(cyclohexane-1,2-dicarboxylic acid),Double-decker silsequioxane alicyclic acid anhydride, bis(1,3-dioxo-1,3-dihydroisobenzofuran-5-carboxylic acid) 1,4-phenylene, and the anhydride of the acid represented by the following formula (3). These may be used singly or in combination of two or more.

The polyimide compounds of the present invention are preferably those that contain the anhydride represented by the following formula (3) among the anhydrides described above.

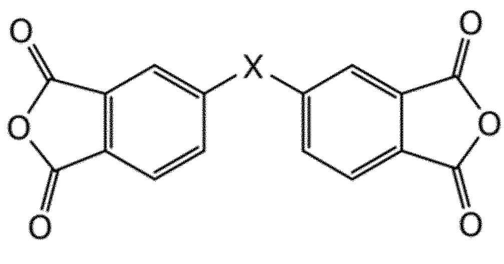

(3)

In the formula, X is a carbonyl group, an oxygen atom, or a single bond.

Among the acid anhydrides mentioned above, 3,4,3',4'-benzophenone tetracarboxylic acid dianhydride (BTDA),

where X is a carbonyl group,4,4'-oxydiphthalic anhydride (ODPA) where X is an oxygen atom, and diphenyl-3,3',4,4'-tetracarboxylic anhydride (BPDA) where X is a single bond are preferably used.

The polyimide of the present invention can be obtained by reacting a diamine component containing an aromatic diamine compound represented by formulae (1) and (2) with an acid anhydride component to obtain a polyamide acid, followed by a cyclization-dehydration reaction to convert the polyamide acid to a polyimide. Since the obtained polyimide is soluble in a solvent, it can be easily formed into a film by dissolving it in a suitable organic solvent to form a varnish.

Regarding the mixing ratio of the diamine component to the acid anhydride component, the total amount of the diamine component is preferably from 0.5 mol% to 1.5 mol%, more preferably from 0.9 mol% to 1.1 mol% with respect to a total acid anhydride amount of 1 mol%.

The reaction between the diamine component and the acid anhydride component is preferably carried out in an organic solvent. An organic solvent is not particularly limited as long as it does not react with the diamine compound and the acid anhydride and can dissolve the reaction product of the diamine compound and the acid anhydride. Examples thereof include N-methyl-2-pyrrolidone, N,N-dimethyl formamide, N,N-dimethyl acetamide, N,N'-dimethyl imidazolidinone, γ-butyrolactone, dimethyl sulfoxide, sulfolane, 1,3-dioxolane, tetrahydrofuran, ethylene glycol dimethyl ether, ethylene glycol diethyl ether, ethylene glycol dibutyl ether, diethylene glycol dimethyl ether, diethylene glycol diethyl ether, diethylene glycol methylethyl ether, dipropylene glycol dimethyl ether, diethylene glycol dibutyl ether, dibenzyl ether, methyl lactate, ethyl lactate, butyl lactate, methyl benzoate, ethyl benzoate, triglyme, tetraglyme, toluene, and xylene. From the viewpoint of the solubility of the diamine compound of Formula (1) above, N-methyl-2-pyrrolidone, N,N'-dimethylimidazolidinone, and γ-butyrolactone are preferred.

The reaction temperature between the diamine compound and the acid anhydride is preferably 40°C or less in the case of chemical imidization. In the case of thermal imidization, the temperature is preferably from 150°C to 220°C, more preferably from 170°C to 200°C.

An imidization catalyst may be used during the cyclization-dehydration reaction. Examples of an imidization catalyst that can be used include methylamine, ethylamine, trimethylamine, triethylamine, propylamine, tripropylamine, butylamine, tributylamine, tert-butylamine, hexylamine, triethanolamine, N,N-dimethylethanolamine, N,N-diethylethanolamine, triethylenediamine, N-methylpyrrolidine, N-ethylpyrrolidine, aniline, benzylamine, toluidine, trichloroaniline, pyridine, colligin, lutidine, picoline, quinoline, iso quinoline, and valerolactone. In addition, if necessary, azeotropic dehydrating agents such as toluene, xylene, and ethylcyclohexane, and acid catalysts such as acetic anhydride, propionic anhydride, butyric anhydride, and benzoic anhydride can be used.

Sealing agents such as benzoic acid, phthalic anhydride, and hydrogenated phthalic anhydride can be used in the reaction between the diamine compound and the acid anhydride.

In addition, a double bond or triple bond can also be introduced at the terminal of the polyimide compound by using maleic anhydride, ethynyl phthalic anhydride, methylethynyl phthalic anhydride, phenylethynyl phthalic anhydride, phenylethynyltrimellitic anhydride, 3- or 4- ethynylaniline, or the like.

The glass transition temperature of the polyimide of the present invention is about 200°C, preferably about 180°C, and more preferably about 170°C. Therefore, according to the polyimide of the present invention, the heat treatment temperature can be set to a relatively low temperature of about 200°C.

[Lithium-ion secondary battery negative electrode material]

The above-described polyimide of the present invention can be preferable as a negative electrode material for lithium-ion secondary battery (hereinafter sometimes simply referred to as "negative electrode material"), especially as a negative electrode binder component. In other words, a negative electrode material containing the above-described polyimide and negative electrode active material can be used as a binder.

The above-described polyimide may be used singly as a binder. Other resins may be contained in the binder; for example, polyvinylidene fluoride (PVDF) can be used. In addition, instead of PVDF, for example, a PVDF copolymer resin, a fluorine-based resin, a styrene-butadiene rubber (SBR), an ethylene-propylene rubber (EPDM), a styrene-acrylonitrile copolymer, or the like may be used as a binder. For example, hexafluoropropylene (HFP), perfluoromethyl vinyl ether (PFMV), or a copolymer resin of tetrafluoroethylene (TFE) and PVDF may be used as a PVDF copolymer resin. For example, polytetrafluoroethylene (PTFE), a fluorine rubber, or the like may be used as a fluorine-based resin. For example, polysaccharides such as carboxymethyl cellulose (CMC) and thermoplastic resins such as polyimide resins may be used as other binders. In addition, two or more of the above-described binders may be used in combination.

The content of the polyimide in the negative electrode material is preferably from 1% by mass to 20% by mass, more preferably from 3% by mass to 18% by mass. The cycle characteristics of the lithium-ion secondary battery can be further improved by setting the content of the polyimide in the negative electrode material within the above-described numerical range.

From the viewpoint of battery capacity, it is preferable to use a silicon-based material as the negative electrode active material. Examples of a silicon-based material include silicon particles, alloys of silicon with metals such as tin,

nickel, iron, copper, silver, cobalt, manganese, and zinc, and compounds of silicon with boron, nitrogen, oxygen, carbon, and the like.

Examples of a silicon-based material include Si, SiO, $SiO_2$, $SiB_4$, $Mg_2Si$, $Ni_2Si$, $CoSi_2$, $NiSi_2$, $Cu_5Si$, $FeSi_2$, $MnSi_2$, $ZnSi_2$, SiC, $Si_3N_4$, and $Si_2N_2O$, of which Si and SiO are particularly preferable.

Cathode active materials other than silicon-based materials may also be used. Examples thereof can include lithium metal, metal oxide, and graphite. In addition, two or more kinds of negative electrode active materials may be contained as negative electrode materials.

From the viewpoint of battery capacity, the above-described silicon-based negative electrode active material is contained at 30 parts by mass or more, more preferably 50 parts by mass or more, particularly preferably 95 parts by mass or more with respect to 100 parts by mass of negative electrode active materials.

In one embodiment, the negative electrode material may contain a conductive agent in addition to the above-described polyimide and negative electrode active material. Examples of a conductive agent include carbon black (such as acetylene black, ketjen black, or furnace black), graphite, carbon fibers, carbon flakes, metal fibers, and foils. Among these, carbon black is preferable, and acetylene black is more preferable. These conductive agents may be used singly or in combination of two or more.

The content of the conductive agent in the negative electrode material is preferably from 0.1% by mass to 25% by mass, more preferably from 1% by mass to 20% by mass in the entire negative electrode material. A favorable conductive path can be formed in the negative electrode active material layer by setting the content of the conductive agent within the above-described numerical range.

The negative electrode material may contain additives within the scope that does not impair the characteristics of the present invention. Examples thereof include a thickener and a filler.

[Lithium-ion secondary battery negative electrode]

The lithium-ion secondary battery negative electrode of the present invention comprises a negative electrode current collector and a negative electrode active material layer formed on the negative electrode current collector, in which the negative electrode active material layer is composed of the above described negative electrode material.

Examples of the current collector include, but are not particularly limited to, copper, nickel, stainless steel, gold, iron, aluminum and their alloys, nickel-plated steel, and chrome-plated steel. It is preferable to use a current collector with a thickness of 10 μm or less.

The thickness of the negative electrode active material layer is preferably from 15 μm to 150 μm, more preferably from 20 μm to 120 μm. The Initial charge/discharge efficiency and cycle characteristics of the lithium-ion secondary battery can be further improved by setting the thickness of the negative electrode active material layer within the above-described numerical range.

The lithium-ion secondary battery negative electrode of the present invention can be produced by applying a solution prepared by dissolving or dispersing the above-described negative electrode material in an organic solvent onto a current collector and drying the solution.

The above-described organic solvents can be used herein. N-methyl-2-pyrrolidone, N,N'-dimethylimidazolidinone, and γ-butyrolactone are preferable from the viewpoint of solubility or dispersibility of a resin composition.

Examples of the coating method include, but are not particularly limited to, a die coater method, a three-roll transfer coater method, a doctor blade method, a dip method, a direct roll method, and a gravure method.

[Lithium-ion secondary battery]

The lithium-ion secondary battery of the present invention comprises the above-described negative electrode, a positive electrode, and non-aqueous electrolyte. In addition, in one embodiment, the lithium-ion secondary battery of the present invention comprises a separator disposed between the negative electrode and the positive electrode.

As the positive electrode, conventionally known positive electrodes used for lithium-ion secondary batteries can be appropriately used. The positive electrode can be produced by applying an positive electrode -forming material onto a current collector and drying the material.

A material for positive electrode contains an positive electrode active material and a binder and may further contain the above-described conductive agent and additives.

Examples of the positive electrode active material include lithium cobaltate, lithium nickelate, lithium manganate, and lithium iron phosphate.

As the binder, the above-described polyimide or binder used as a positive electrode material can be used.

In addition, lithium foil or the like can be used as the positive electrode, which is not limited to the above.

A conventionally known separator can be used. Examples thereof include paper separators, resin separators such as polyethylene and polypropylene, and glass fiber separators.

The above-described positive electrode and negative electrode are disposed in a battery container. The container is filled with an organic solvent in which the electrolyte has been dissolved. Examples of the electrolyte include, but are not particularly limited to, non-aqueous electrolytes such as $LiPF_6$, $LiClO_4$, $LiBF_4$, $LiClF_4$, $LiAsF_6$, $LiSbF_6$, $LiAlO_4$, $LiAlCl_4$, $CF_3SO_3Li$, $LiN(CF_3SO_2)_3$, LiCl, and LiI. Of these, $LiPF_6$, $LiClO_4$, and $CF_3SO_3Li$, which have high degrees of dissociation, are preferred.

Examples of the organic solvent include, but are not particularly limited to, carbonate compounds, lactone compounds, ether compounds, sulfolane compounds, dioxolane compounds, ketone compounds, nitrile compounds, and halogenated hydrocarbon compounds. Specific examples thereof can include: carbonates such as dimethyl carbonate, methyl ethyl carbonate, diethyl carbonate, ethylene carbonate, propylene carbonate, ethylene glycol dimethyl carbonate, propylene glycol dimethyl carbonate, ethylene glycol diethyl carbonate, vinylene carbonate; lactones such as $\gamma$-butyl lactone; ethers such as dimethoxyethane, tetrahydrofuran, 2-methyltetrahydrofuran, tetrahydropyran, and 1,4-dioxane; sulfolanes such as sulfolane and 3-methylsulfolane; dioxolanes such as 1,3-dioxolane; ketones such as 4-methyl-2-pentanone; nitriles such as acetonitrile, pyropionitrile, valeronitrile, and benzonitrile; halogenated hydrocarbons such as 1,2-dichloroethane; and other ionic liquids of methyl formate, dimethylformamide, diethylformamide, dimethylsulfoxide, imidazolium salt, quaternary ammonium salt, and the like. In addition, the organic solvent may be any combination of them.

Among the above-described organic solvents, a carbonate compound, which has low solubility in the polyimide used for the negative electrode and can suppress the swelling of the polyimide, can be preferably used.

The lithium-ion secondary battery can be formed into a cylindrical shape, a coin shape, a square shape, a laminate shape, or any other shape. The basic configuration of the battery is the same regardless of the shape and can be implemented by changing the design depending on the purpose. For example, a lithium-ion secondary battery having a cylindrical shape can be obtained by housing a wound body, in which a negative electrode formed by coating a negative electrode current collector with a negative electrode active material and a positive electrode formed by coating a positive electrode current collector with a positive electrode active material are wound via a separator, in a battery can, injecting a non-aqueous electrolytic solution thereinto, place insulating plates on the top and bottom of the battery can, and sealing the battery can. In addition, in the case of the application of a lithium-ion secondary battery having a coin shape, a disk-shaped negative electrode, a separator, a disk-shaped positive electrode, and a stainless steel plate are housed in the form of layers in a coin-type battery can, a non-aqueous electrolytic solution is injected into the battery can, and the battery can be sealed.

## EXAMPLES

The present invention will be described in more detail with reference to Examples below; however, the present invention is not limited to the examples. In the following description, "part(s)" and "%" are based on mass unless otherwise specified.

[Example 1]

A 500-mL separable flask equipped with a nitrogen inlet tube and a stirrer was charged with 15.22 g (50 mmol) of (2-phenyl-4-aminophenyl)-4-aminobenzoate (PHBAAB) and 14.62 g (50 mmol) of 1,3-bis(3-aminophenoxy)benzene (APB-N) as aromatic diamine compound represented by the following formula, 31.02 g (100 mmol) of diphenyl-3,3',4,4'-tetracarboxylic dianhydride (ODPA) represented by the following formula, 261 g of N-methyl-2-pyrrolidone (NMP), 1.58 g (20 mmol) of pyridine, and 26 g of toluene, which were then reacted for 9 hours at 180°C under a nitrogen atmosphere, during which toluene was removed from the system. Thus, 18% by weight of a polyimide solution was obtained.

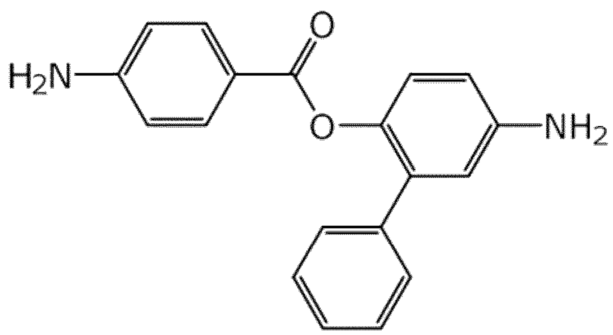

(PHBAAB)

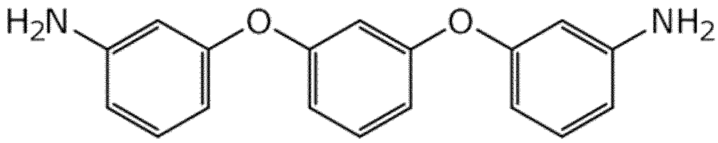

(APB-N)

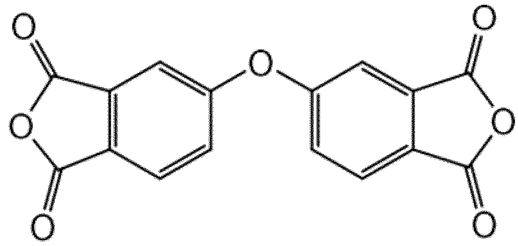

(ODPA)

[Example 2]

An apparatus the same as in Example 1 was charged with 12.17 g (40 mmol) of PHBAAB, 11.69g (40 mmol) of APB-N, 8.65g (40 mmol) of 4,4'-diaminodiphenyl sulfide (ASD) as an aromatic diamine compound represented by the following formula, 18.61 g (600 mmol) of ODPA, 19.33 g (60 mmol) of 3,4,3',4'-benzophenone tetracarboxylic acid dianhydride (BTDA) as represented by the following formula, 301 g of NMP, 1.90 g (24 mmol) of pyridine, and 30 g of toluene, which were then reacted for 5 hours at 180°C under a nitrogen atmosphere, during which toluene was removed from the system. Thus, 18% by weight of a polyimide solution was obtained.

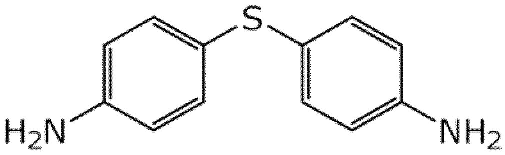

(ASD)

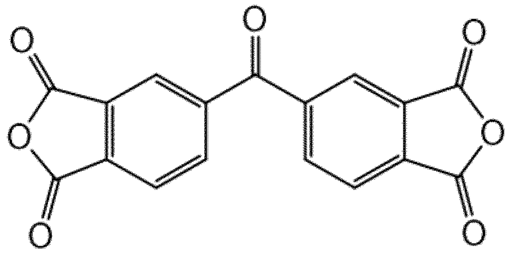

(BTDA)

[Example 3]

An apparatus the same as in Example 1 was charged with 12.17 g (40 mmol) of PHBAAB, 11.69 g (40 mmol) of APB-N, 16.42 g (40 mmol) of 2,2-bis[4-(4-aminophenoxy)phenyl]propane (BAPP) represented by the following formula as an aromatic diamine compound, 18.61 g (60 mmol) of ODP, 19.33 g (60 mmol) of BTDA, 337 g of NMP, 1.90 g (24 mmol) of pyridine, and 34 g of toluene, which were then reacted for 5 hours at 180°C under a nitrogen atmosphere, during which toluene was removed from the system. Thus, 18% by weight of a polyimide solution was obtained.

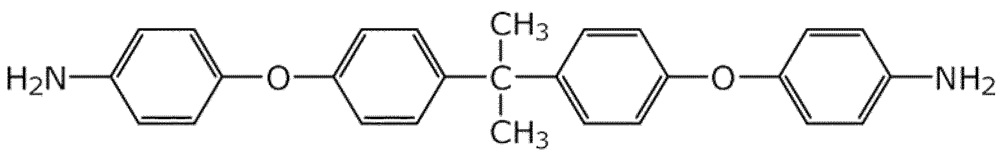

(BAPP)

[Example 4]

An apparatus the same as in Example 1 was charged with 12.17 g (40 mmol) of PHBAAB, 11.69 g (40 mmol) of 1,3-bis(4-aminophenoxy)benzene (TPE-R) represented by the following formula as an aromatic diamine compound,

16.42 g (40 mmol) of BAPP, 37.23 g (120 mmol) of ODP, 333 g of NMP, 1.90 g (24 mmol) of pyridine, and 33 g of toluene, which were then reacted for 5 hours at 180°C under a nitrogen atmosphere, during which toluene was removed from the system. Thus, 18% by weight of a polyimide solution was obtained.

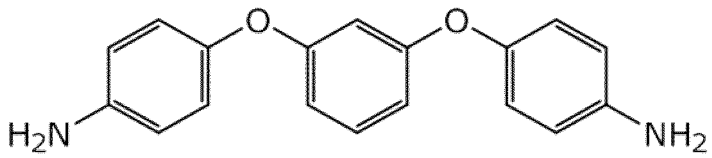

(TPE-R)

[Example 5]

An apparatus the same as in Example 1 was charged with 15.22 g (50 mmol) of PHBAAB, 14.62 g (50 mmol) of APB-N, 24.82 g (80 mmol) of ODP, 5.88 g (20 mmol) of diphenyl-3,3',4,4'-tetracarboxylic acid dianhydride (BPDA) represented by the following formula as an anhydrous acid, 259 g of NMP, 1.58 g (20 mmol) of pyridine, and 26 g of toluene, which were then reacted for 9 hours at 180°C under a nitrogen atmosphere, during which toluene was removed from the system. Thus, 18% by weight of a polyimide solution was obtained.

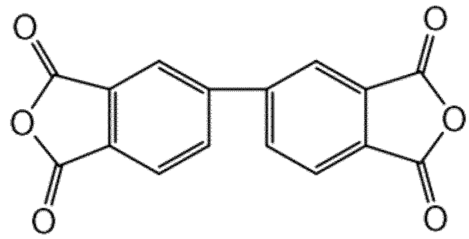

(BPDA)

[Example 6]

An apparatus the same as in Example 1 was charged with 7.61 g (25 mmol) of PHBAAB, 9 21.92 g (75 mmol) of APB-N, 31.02 g (100 mmol) of ODPA, 259 g of NMP, 1.58 g (20 mmol) of pyridine, and 26 g of toluene, which were then reacted for 9 hours at 180°C under a nitrogen atmosphere, during which toluene was removed from the system. Thus, 18% by weight of a polyimide solution was obtained.

[Example 7]

An apparatus the same as in Example 1 was charged with 7.61 g (25 mmol) of PHBAAB, 14.62 g (50 mmol) of APN-N, 10.81 g (25 mmol) of bis[4-(4-aminophenoxy)phenyl]sulfone (BAPS) represented by the following formula as an aromatic diamine compound, 31.02 g (100 mmol) of ODP, 275 g of NMP, 1.58 g (20 mmol) of pyridine, and 28 g of toluene, which were then reacted for 7 hours at 180°C under a nitrogen atmosphere, during which toluene was removed from the system. Thus, 18% by weight of a polyimide solution was obtained.

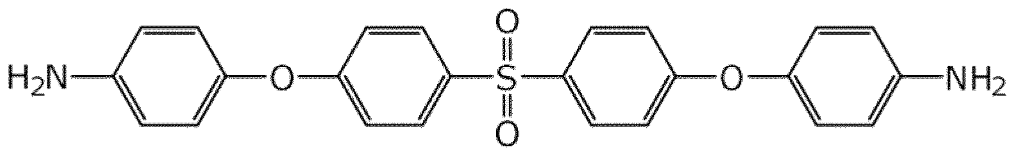

(BAPS)

[Example 8]

An apparatus the same as in Example 1 was charged with 9.13 g (30 mmol) of PHBAAB, 14.62 g (50 mmol) of APB-N, 8.21 g (20 mmol) of BAPP, 31.02 g (100 mmol) of ODPA, 271 g of NMP, 1.58 g (20 mmol) of pyridine, and 27 g of toluene, which were then reacted for 5 hours at 180°C under a nitrogen atmosphere, during which toluene was removed from the system. Thus, 18% by weight of a polyimide solution was obtained.

[Example 9]

An apparatus the same as in Example 1 was charged with 6.09 g (20 mmol) of PHBAAB, 14.62 g (50 mmol) of APB-N, 12.32 g (30 mmol) of BAPP, 31.02 g (100 mmol) of ODPA, 275 g of NMP, 1.58 g (20 mmol) of pyridine, and 28 g of toluene, which were then reacted for 5 hours at 180°C under a nitrogen atmosphere, during which toluene was removed from the system. Thus, 18% by weight of a polyimide solution was obtained.

[Example 10]

An apparatus the same as in Example 1 was charged with 3.04 g (10 mmol) of PHBAAB, 14.62 g (50 mmol) of APB-N, 16.42 g (40 mmol) of BAPP, 31.02 g (100 mmol) of ODPA, 280 g of NMP, 1.58 g (20 mmol) of pyridine, and 28 g of toluene, which were then reacted for 5 hours at 180°C under a nitrogen atmosphere, during which toluene was removed from the system. Thus, 18% by weight of a polyimide solution was obtained.

[Comparative Example 1]

An apparatus the same as in Example 1 was charged with 15.22 g (50 mmol) of PHBAAB, 10.01 g (50 mmol) of 4,4'-diaminodiphenyl ether (4,4'-DPE) represented by the following formula as an aromatic diamine compound, 31.02 g (100 mmol) of ODP, 240 g of NMP, 1.58 g (20 mmol) of pyridine, and 24 g of toluene, which were then reacted for 7 hours at 180°C under a nitrogen atmosphere, during which toluene was removed from the system. Thus, 18% by weight of a polyimide solution was obtained.

[Comparative Example 2]

An apparatus the same as in Example 1 was charged with 15.22 g (50 mmol) of PHBAAB, 21.63 g (50 mmol) of BAPS, 31.02 g (100 mmol) of ODPA, and 364 g of NMP, 1.58 g (20 mmol) of pyridine, and 36 g of toluene, which were then reacted for 9 hours at 180°C under a nitrogen atmosphere, during which toluene was removed from the system. Thus, 15% by weight of a polyimide solution was obtained.

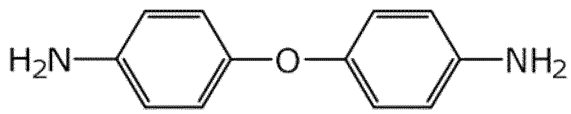

(4,4'-DPE)

[Comparative Example 3]

An apparatus the same as in Example 1 was charged with 15.22 g (50 mmol) of PHBAAB, 21.63 g (50 mmol) of BAPS, 15.51 g (50 mmol) of ODPA, 16.11 g of BTDA, and 368 g of NMP, 1.58 g (20 mmol) of pyridine, and 37 g of toluene, which were then reacted for 9 hours at 180°C under a nitrogen atmosphere, during which toluene was removed from the system. Thus, 15% by weight of a polyimide solution was obtained.

[Comparative Example 4]

An apparatus the same as in Example 1 was charged with 9.13 g (30 mmol) of PHBAAB, 12.32 g (30 mmol) of BAPP, 6.01 g (30 mmol) of 4,4'-DPE, 27.92 g (90 mmol) of ODPA, 295 g of NMP, 1.42 g (18 mmol) of pyridine, and 30 g of toluene, which were then reacted for 6 hours at 180°C under a nitrogen atmosphere, during which toluene was removed from the system. Thus, 18% by weight of a polyimide solution was obtained.

[Comparative Example 5]

An apparatus the same as in Example 1 was charged with 14.62 g (50 mmol) of APB-N, 20.50 g (50 mmol) of BAPP, 15.51 g (50 mmol) of ODPA, 16.11 g (50 mmol) of BTDA, 295 g of NMP, 1.42 g (18 mmol) of pyridine, and 30 g of toluene, which were then reacted for 6 hours at 180°C under a nitrogen atmosphere, during which toluene was removed from the system. Thus, 18% by weight of a polyimide solution was obtained.

<Grass transition temperature (Tg)>

Each of the polyimide solutions obtained in Examples 1-10 and Comparative Examples 1-5 was applied onto a

10-cm square glass plate by the spin coating method and dried at 130 °C for 24 hours. The glass plates were then peeled off to obtain test specimens. Thereafter, the resulting coating was peeled off from the glass plate and cut, thereby obtaining a test piece. The glass transition temperature (Tg) of each test piece was measured using a Rigaku DSC8230 (trade name) under a nitrogen atmosphere at a heating rate of 10 °C/min. The measurement results are shown in Table 1.

<Film Physical Properties>

Each of the polyimide solutions obtained in Examples 1-10 and Comparative Examples 1-5 was applied onto a 10-cm square glass plate by the spin coating method and dried at 100°C for 0.5 hours, at 200°C for 0.5 hours, and at 250°C for 1 hour. Thereafter, the resulting coating was peeled off from the glass plate and cut, thereby obtaining a test piece of 80 mm in length × 10 mm in width × 15 μm in thickness.
For each test piece thus obtained, the elastic modulus in the MD and TD directions was measured using a tensile tester (trade name: AG-Xplus 50 kN manufactured by SHIMADZU CORPORATION) at a tensile speed of 10 mm/min. An average value of the measured values in the MD and TD directions was calculated for the elastic modulus. The measurement results are shown in Table 1.

<Evaluation of Cycle Characteristics>

The obtained polyimide serving as a binder, silicon (Si) serving as negative electrode active materials, and a conductive agent were mixed based on the following composition, thereby preparing a lithium-ion secondary battery negative electrode material.

| | |
|---|---|
| - Polyimide | 10.0% by mass |
| - Silicon | 87.0% by mass |
| - Conductive agent | 3.00% by mass |

An electrolytic copper foil having a thickness of 10 μm was prepared as a negative electrode current collector and then the negative electrode material obtained as described above was coated on a surface of the electrolytic copper foil and heated at 200 °C to form a negative electrode active material layer having a thickness of 30 μm to obtain a negative electrode 1.
In addition, a negative electrode 2 was obtained in the same manner described above, except changing heat treatment temperature to 300 °C. Note that negative electrode 1 was only prepared for Examples 4-10.
A coin-cell-type lithium-ion secondary battery was produced by using lithium foil as a positive electrode, ethylene carbonate and ethylmethyl carbonate as electrolytic solutions, a polyolefin-made monolayer separator and the negative electrodes obtained as described above.
Each lithium-ion secondary battery obtained as above was allowed to stand still in an environment at 25°C for 24 hours. Thereafter, performance evaluation of the lithium-ion secondary battery was carried out as described below in an environment at 25°C.
A cycle of performing constant current (CC) charging up to 5 mV at a current density equivalent to 0.1 C, switching CC charging to constant voltage (CV) charging at 5 mV, performing charging up to a current density equivalent to 0.01 C, and then performing CC discharge to 1.2 V with a current density equivalent to 0.1 C was repeated twice (two cycles) at 25°C. The discharged capacity equivalent to 0.1 C at the 1st cycle is represented by A.
Subsequently, a cycle of performing constant current (CC) charging up to 5 mV at a current density equivalent to 0.2 C, switching CC charging to constant voltage (CV) charging at 5 mV, performing charging up to a current density equivalent to 0.02 C, and then performing CC discharge to 1.2 V with a current density equivalent to 0.2 C was repeated three times (three cycles) at 25°C. Then, a cycle of performing constant current (CC) charging up to 5 mV at a current density equivalent to 0.5 C, switching CC charging to constant voltage (CV) charging at 5 mV, performing charging up to a current density equivalent to 0.05 C, and then performing CC discharge to 1.2 V with a current density equivalent to 0.5 C was repeated 30 times (30 cycles) at 25°C. The discharged capacity equivalent to 0.5C at the 30th cycle is represented by B.
Cycle retention rate was calculated based on the following equation:

$$\Delta C\ (\%) = (B/A) \times 100.$$

The evaluation of cycle retention rate of the lithium-ion secondary batteries using the negative electrodes 1 and 2 was as shown in Table 1 below.

Table 1

| | Monomers for polyimide | | | | | | | | | | Film physical properties | | Battery properties Cycle retention rate (%) | |
|---|---|---|---|---|---|---|---|---|---|---|---|---|---|---|
| | Diamine component (mol%) | | | | | | | Acid anhydride component (mol%) | | | Tg (°C) | Tensile modulus (GPa) | Negative electrode 1 (200°C treatment) | Negative electrode 2 (300°C treatment) |
| | PHBAAB | APB-N | TPE-R | BAPS | BAPP | ASD | 4,4'-DPE | ODPA | BTDA | BPDA | | | | |
| Ex. 1 | 50 | 50 | - | - | - | - | - | 100 | - | - | 184 | 3.8 | 81 | 82 |
| Ex. 2 | 33.3 | 33.3 | - | - | - | 33.3 | - | 50 | 50 | - | 167 | 3.6 | 79 | 82 |
| Ex. 3 | 33.3 | 33.3 | - | - | 33.3 | - | - | 50 | 50 | - | 204 | 3.2 | 80 | 81 |
| Ex. 4 | 33.3 | - | 33.3 | - | 33.3 | - | - | 100 | - | - | 204 | 3.0 | 76 | - |
| Ex. 5 | 50 | 50 | - | - | - | - | - | 80 | - | 20 | 180 | 3.4 | 84 | - |
| Ex. 6 | 25 | 75 | - | - | - | - | - | 100 | - | - | 171 | 3.4 | 81 | - |
| Ex. 7 | 25 | 50 | - | 25 | - | - | - | 100 | - | - | 184 | 3.1 | 81 | - |
| Ex. 8 | 30 | 50 | - | - | 20 | - | - | 100 | - | - | 171 | 3.1 | 79 | - |
| Ex. 9 | 20 | 50 | - | - | 30 | - | - | 100 | - | - | 167 | 3.1 | 79 | - |
| Ex. 10 | 10 | 50 | - | - | 40 | - | - | 100 | - | - | 170 | 3.1 | 76 | - |
| Comp. Ex. 1 | 50 | - | - | 50 | - | - | - | 100 | - | - | 236 | 3.7 | 34 | 81 |
| Comp. Ex. 2 | 50 | - | - | - | - | - | 50 | 100 | - | - | 229 | 3.6 | 64 | 83 |
| Comp. Ex. 3 | 50 | - | - | 50 | - | - | - | 50 | 50 | - | 223 | 3.7 | 21 | 79 |
| Comp. Ex. 4 | 33.3 | - | - | - | 33.3 | - | 33.3 | 100 | - | - | 219 | 3.0 | 45 | 73 |
| Comp. Ex. 5 | - | 50 | - | - | 50 | - | - | 50 | 50 | - | 163 | 2.6 | 65 | 73 |

As clearly shown in the evaluation results in Table 1, the polyimide compounds (Examples 1-3) containing two types of aromatic diamine compounds with structures (1) and (2) as diamine components maintain their inherent properties of polyimide compounds, such as thermal stability, mechanical properties, and maintain their cycle retention rate. Furthermore, the polyimide compounds containing the two aromatic diamine compounds of formulae (1) and (2) as the diamine components (Examples 1-10) exhibit high cycle retention rates without compromising the inherent properties of polyimide compounds, such as heat resistance and mechanical properties, even when the heat treatment temperature during the fabrication of the negative electrode active material layer is relatively low at 200°C.

In contrast, polyimide compounds (Comparative Examples 1-5) containing aromatic diamine compounds of formula (1) and other aromatic diamine compounds as the diamine component exhibit excellent heat resistance and mechanical properties; however, when the heat treatment temperature during the fabrication of the negative electrode active material layer is changed from 300°C to 200°C, the cycle retention rate decreases sharply.

## Claims

1. A polyimide used as an electrode material for lithium-ion secondary batteries, comprising at least

   a diamine component containing an aromatic diamine compound represented by the following Formula (1):

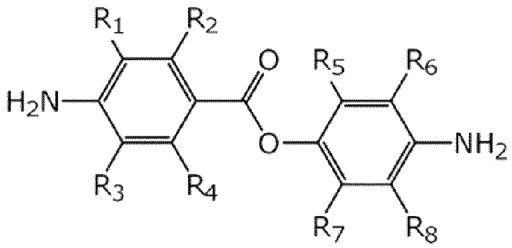

(1)

(where
$R_1$ to $R_4$ are hydrogen atoms, and
any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom), and
an aromatic diamine compound represented by the following Formula (2).

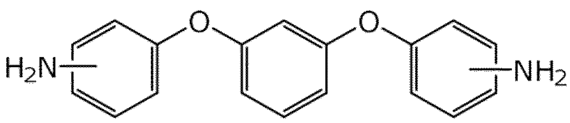

(2)

2. The polyimide according to claim 1, wherein an acid anhydride component contains an acid anhydride represented by the following Formula (3):

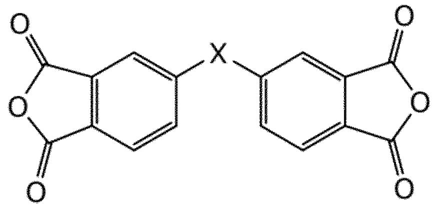

(3)

(where X is carbonyl group, oxygen atom or a single bond).

3. The polyimide according to claim 1, wherein the compound of Formula (1) is contained at 10 mol% or more in the diamine component.

4. A negative electrode for lithium-ion secondary battery, comprising a negative electrode current collector and a negative active material layer formed on the negative electrode negative electrode current collector, wherein the negative electrode active material layer is composed of the negative electrode material according to claim 1.

**5.** The negative electrode for lithium-ion secondary battery according to claim 4, wherein the negative electrode active material layer comprises 95 mass parts or more of a silicon-based negative electrode active material based on 100 mass parts of the negative electrode active material.

**6.** A lithium-ion secondary battery, comprising the negative electrode according to claim 4 or 5, a positive electrode and a non-aqueous electrolyte.

## INTERNATIONAL SEARCH REPORT

International application No.
**PCT/JP2023/045442**

**A. CLASSIFICATION OF SUBJECT MATTER**

***H01M 4/60***(2006.01)i; ***H01M 4/13***(2010.01)i; ***H01M 4/36***(2006.01)i; ***H01M 4/134***(2010.01)i; ***H01M 4/136***(2010.01)i; ***H01M 4/137***(2010.01)i
FI: H01M4/60; H01M4/13; H01M4/134; H01M4/136; H01M4/137; H01M4/36 E

According to International Patent Classification (IPC) or to both national classification and IPC

**B. FIELDS SEARCHED**

Minimum documentation searched (classification system followed by classification symbols)

H01M4/60; H01M4/13; H01M4/134; H01M4/136; H01M4/137; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2021/053800 A1 (WINGO TECHNOLOGY CO., LTD.) 25 March 2021 (2021-03-25) claims 1-10, paragraphs [0089]-[0092], example 3, table 2 | 1-4, 6<br><br>5 |
| Y | WO 2022/202701 A2 (WINGO TECHNOLOGY CO., LTD.) 29 September 2022 (2022-09-29) examples 1, 2, table 1 | 5 |
| A | WO 2017/111343 A1 (DOOSAN CORPORATION) 29 June 2017 (2017-06-29) entire text, all drawings | 1-6 |
| A | WO 2018/061727 A1 (NIPPON STEEL & SUMIKIN CHEMICAL CO., LTD.) 05 April 2018 (2018-04-05) entire text, all drawings | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/045442**

**C. DOCUMENTS CONSIDERED TO BE RELEVANT**

| Category* | Citation of document, with indication, where appropriate, of the relevant passages | Relevant to claim No. |
|---|---|---|
| A | US 2021/0087319 A1 (ZHEN DING TECHNOLOGY CO., LTD.) 25 March 2021 (2021-03-25) entire text, all drawings | 1-6 |

Form PCT/ISA/210 (second sheet) (July 2022)

**INTERNATIONAL SEARCH REPORT**
**Information on patent family members**

International application No.
**PCT/JP2023/045442**

| Patent document cited in search report | Publication date (day/month/year) | Patent family member(s) | Publication date (day/month/year) |
|---|---|---|---|
| WO 2021/053800 A1 | 25 March 2021 | (Family: none) | |
| WO 2022/202701 A2 | 29 September 2022 | CN 117043991 A<br>KR 10-2023-0160302 A | |
| WO 2017/111343 A1 | 29 June 2017 | KR 10-2017-0076127 A | |
| WO 2018/061727 A1 | 05 April 2018 | CN 109789689 A<br>KR 10-2019-0055809 A | |
| US 2021/0087319 A1 | 25 March 2021 | CN 112521603 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017138604 A1
- WO 2022202701 A1